# EUROPEAN PATENT SPECIFICATION

(11) **EP 4 037 135 B1**
(45) Date of publication and mention of the grant of the patent: **03.04.2024**
(21) Application number: 20868973.7
(22) Date of filing: 15.07.2020
(51) Int. Cl.: H02J 7/00, B60L 53/30, B60L 53/80, H01M 50/20, H01M 10/46, B60L 50/64, B60K 1/04, B60L 50/60

(54) **CHARGER FOR PORTABLE BATTERY**
LADEGERÄT FÜR TRAGBARE BATTERIE
CHARGEUR POUR BATTERIE PORTABLE

(30) Priority: 27.09.2019 JP 2019177753
(43) Date of publication of application: 03.08.2022
(73) Proprietor: HONDA MOTOR CO., LTD., Minato-ku Tokyo 107-8556 (JP)
(72) Inventor: TAMAKI, Kenji, Tokyo 107-8556 (JP); MIYAJIMA, Yu, Tokyo 107-8556 (JP); SATO, Akira, Tokyo 107-8556 (JP)
(74) Representative: Kiwit, Benedikt
(86) International application number: PCT/JP2020/027530
(87) International publication number: WO 2021/059686

(56) References cited:
- EP-A1- 0 572 327
- WO-A1-2009/124316
- WO-A2-2013/099229
- JP-A- 2003 047 164
- JP-A- 2014 138 432
- US-A- 4 303 876
- US-A1- 2013 058 022
- US-A1- 2017 106 733
- US-A1- 2018 138 725
- US-B2- 8 786 254

## Description

### TECHNICAL FIELD

The present invention relates to a charger for a portable battery.

The present invention claims priority based on Japanese Patent Application No. 2019-177753, filed September 27, 2019, the content of which is incorporated herein by reference.

### BACKGROUND ART

In the related art, chargers for a battery are known. For example, Japanese Unexamined Patent Application, First Publication No. 2014-138432 discloses a charger in which a battery is horizontally placed. In a state in which the battery is placed in the charger, an end portion of the battery protrudes outward beyond a placement portion of the charger.

### RELATED ART DOCUMENT

### PATENT DOCUMENT

Patent Document 1: Japanese Unexamined Patent Application, First Publication No. 2014-138432
Patent Document 2: United States Patent No. 8786254 B2
Patent Document 3: United States Unexamined Patent Application, First Publication No. 2018-138725 A1
Patent Document 4: United States Unexamined Patent Application, First Publication No. 2017-106733 A1
Patent Document 5: European Unexamined Patent Application, First Publication No. 0 572 327 A1
Patent Document 6: Japanese Unexamined Patent Application, First Publication No. 2003-047164 A

### SUMMARY

### PROBLEMS TO BE SOLVED BY THE INVENTION

However, there is room for improvement in improving the convenience when a battery is attached to and detached from a charger while stability at the time of placement of the battery is achieved.

Hence, an object of the present invention is to provide a charger for a portable battery in which the convenience when a battery is attached to and detached from the charger is improved while the stability at the time of placement of the battery is achieved.

### MEANS FOR SOLVING THE PROBLEM

Regarding means for resolving the foregoing problems, an aspect of the present invention has the features of the appended claim 1, in particular the following constitutions.
(1) According to an aspect of the present invention, there is provided a charger (1) for a portable battery used in an electric vehicle and having a grip portion (110). The charger (1) for a portable battery includes a tray (2) which has a placement surface (10a) on which a battery (100) is placed. The tray (2) has a recess portion (14) which is recessed further downward than the placement surface (10a) at an end portion on a side of the grip portion (110) in a state in which the battery (100) is placed therein.
(2) In the charger (1) for a portable battery according to the foregoing (1), the recess portion (14) may be disposed at a center of the tray (2) in a width direction (V3).
(3) The charger (1) for a portable battery according to the foregoing (1) or (2) may further include an operation portion (60) which allows a charger terminal (6) to move between a connection position for connection to the battery (100) and a retreat position for retreat from the battery (100). The operation portion (60) may be disposed on an outward side of the charger (1) from the recess portion (14), and the operation portion (60) may have a U-shape opening upward at the center of the tray (2) in the width direction (V3).
(4) In the charger (1) for a portable battery according to the foregoing (3), at least a portion of the operation portion (60) may be positioned further downward than a lowest end (14b) of the recess portion (14) at the retreat position.
(5) In the charger (1) for a portable battery according to any one of the foregoing (1) to (4), a wall portion (15) projecting upward beyond the placement surface (10a) may be provided at a boundary portion between the recess portion (14) and the placement surface (10a).
(6) The charger (1) for a portable battery according to any one of the foregoing (1) to (5) may further include a control device (4) which performs charging control of the battery (100). The control device (4) may be disposed below the tray (2). The lowest end (14b) of the recess portion (14) may be positioned above an upper end of the control device (4).
(7) In the charger (1) for a portable battery according to the foregoing (6), a frame (33) may be provided behind and in the vicinity of a rising portion (14c) which rises on the placement surface (10a) from a bottom surface (14a) of the recess portion (14).
(8) In the charger (1) for a portable battery according to any one of the foregoing (1) to (7), an end portion of the battery (100) may not protrude outward beyond the tray (2) in a state in which the battery (100) is placed therein.

### ADVANTAGE OF THE INVENTION

According to the charger for a portable battery described in the foregoing (1) of the present invention, the tray has the recess portion which is recessed further downward than the placement surface at the end portion on a side of the grip portion in a state in which the battery is placed therein. Therefore, the following effect is exhibited.

The battery can be stably supported by side portions of the recess portion of the tray. Furthermore, since a hand can enter the recess portion when the battery is lifted from the charger or placed in the charger, the convenience when the battery is attached to and detached from the charger can be improved. Therefore, the convenience when the battery is attached to and detached from the charger can be improved while the stability at the time of placement of the battery is achieved.

For example, since the grip portion in a state in which the battery (heavy article) is placed therein can be touched with a hand from below via the recess portion, this is favorable when the battery is lifted from the charger.

According to the charger for a portable battery described in the foregoing (2) of the present invention, the recess portion is disposed at the center of the tray in the width direction. Therefore, the following effect is exhibited.

Since the battery can be held in a well-balanced manner, the convenience is further improved. Furthermore, compared to when the recess portion is provided throughout the entirety of the tray in the width direction, stability in a state in which the battery is placed therein can be enhanced.

The charger for a portable battery described in the foregoing (3) of the present invention further includes the operation portion which allows the charger terminal to move between the connection position for connection to the battery and the retreat position for retreat from the battery. The operation portion is disposed on the outward side of the charger from the recess portion, and the operation portion has a U-shape opening upward at the center of the tray in the width direction. Therefore, the following effect is exhibited.

Compared to when the operation portion has a U-shape opening downward (inverted U-shape), the operation portion is unlikely to become a hindrance so that the convenience is further improved.

According to the charger for a portable battery described in the foregoing (4) of the present invention, at least a portion of the operation portion is positioned further downward than the lowest end of the recess portion at the retreat position. Therefore, the following effect is exhibited.

Compared to when the entire operation portion is positioned above the lowest end of the recess portion at the retreat position, the operation portion is unlikely to become a hindrance at the retreat position so that the convenience is further improved.

According to the charger for a portable battery described in the foregoing (5) of the present invention, the wall portion projecting upward beyond the placement surface is provided at the boundary portion between the recess portion and the placement surface. Therefore, the following effect is exhibited.

When a hand of a user is in the recess portion in a state in which the battery is placed therein, entry of the hand to the placement surface can be curbed by the wall portion.

The charger for a portable battery described in the foregoing (6) of the present invention further includes the control device which performs charging control of the battery. The control device is disposed below the tray. The lowest end of the recess portion is positioned above the upper end of the control device. Therefore, the following effect is exhibited.

Even when a load is applied to the recess portion, occurrence of an influence on the control device can be curbed.

According to the charger for a portable battery described in the foregoing (7) of the present invention, the frame is provided behind and in the vicinity of the rising portion which rises on the placement surface from the bottom surface of the recess portion. Therefore, the following effect is exhibited.

A part behind and in the vicinity of the rising portion on the placement surface is a part at which the battery is easily placed. However, the occurrence of a load on the control device when the battery is placed in the tray can be suitably curbed by the frame.

According to the charger for a portable battery described in the foregoing (8) of the present invention, the end portion of the battery does not protrude outward beyond the tray in a state in which the battery is placed therein. Therefore, the following effect is exhibited.

Compared to when the end portion of the battery protrudes outward beyond the tray in a state in which the battery is placed therein, the stability in a state in which the battery is placed therein can be enhanced. Furthermore, the occurrence of an influence on the end portion of the battery due to an external factor can be curbed.

### BRIEF DESCRIPTION OF THE DRAWINGS

Fig. 1 is a perspective view of a charger for a battery in a placed state according to an embodiment.
Fig. 2 is a front view of the charger for the battery in a placed state according to the embodiment.
Fig. 3 is a perspective view of the charger according to the embodiment.
Fig. 4 is a front view of the charger according to the embodiment.
Fig. 5 is a top view of the charger according to the embodiment.
Fig. 6 is a view in a state in which a tray and an upper cover in Fig. 5 are detached.
Fig. 7 is a cross-sectional view along VII-VII in Fig. 5.
Fig. 8 is a cross-sectional view along VIII-VIII in Fig. 5.
Fig. 9 is a cross-sectional view along IX-IX in Fig. 5.
Fig. 10 is a cross-sectional view along X-X in Fig. 5.
Fig. 11 is a cross-sectional view along XI-XI in Fig. 5.
Fig. 12 is a cross-sectional view along XII-XII in Fig. 2.
Fig. 13 is an explanatory view of a position of an end portion of the upper cover according to the embodiment.

### DESCRIPTION OF THE EMBODIMENTS

Hereinafter, an embodiment of the present invention will be described with reference to the drawings. In each of the diagrams, the same reference signs are applied to the same constitutions. In the embodiment, as an example of a charger for a portable battery, a charger for a portable battery (mobile battery) used in an electrically-driven motorcycle (saddle-type electric vehicle) will be described. In the embodiment, an installation surface on which a charger (which will hereinafter be simply referred to as "a charger") for a portable battery (which will hereinafter be simply referred to as "a battery") is installed is a flat floor surface (horizontal surface).

### <Battery>

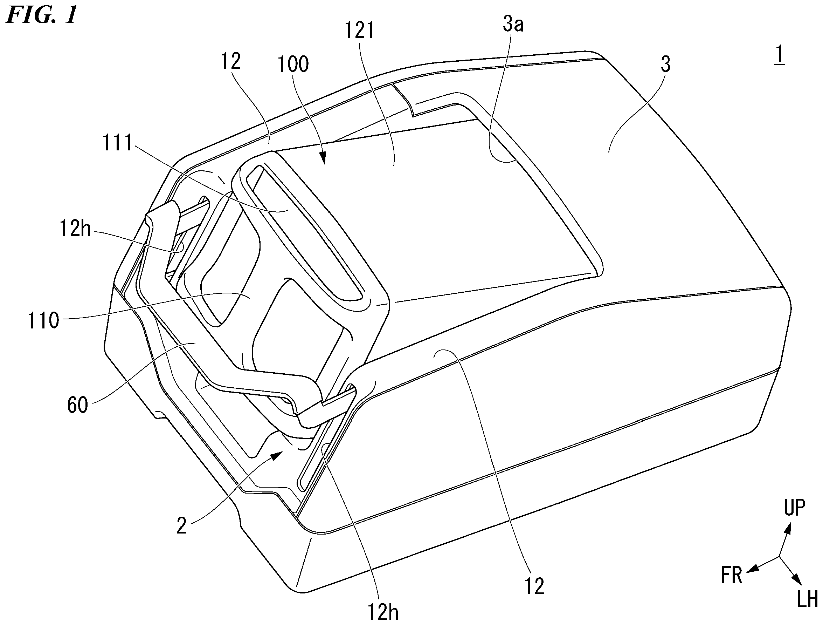

As illustrated in Fig. 1, a battery 100 has a rectangular parallelepiped shape. For example, the battery 100 is a lithium-ion battery.

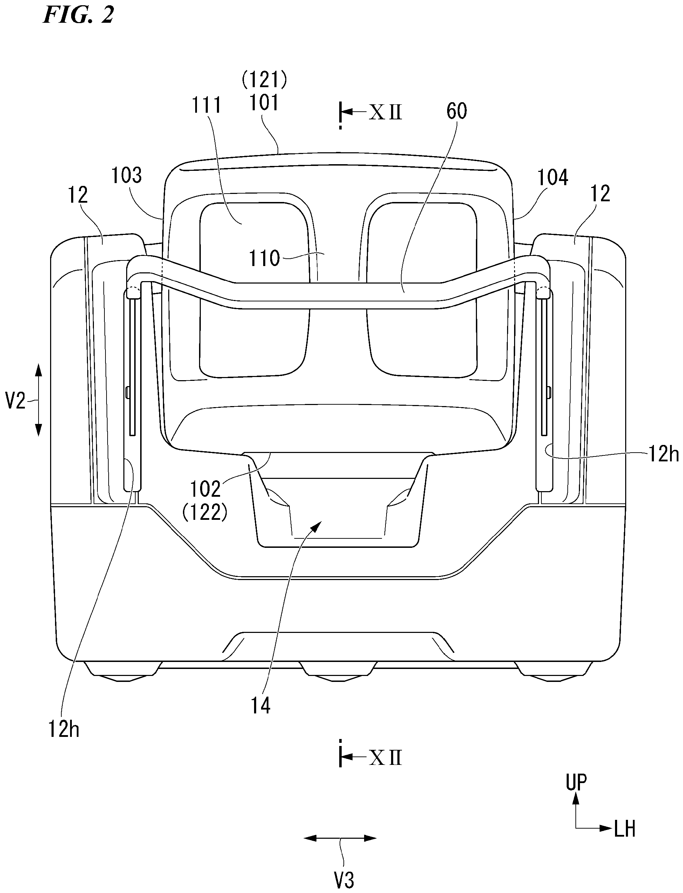

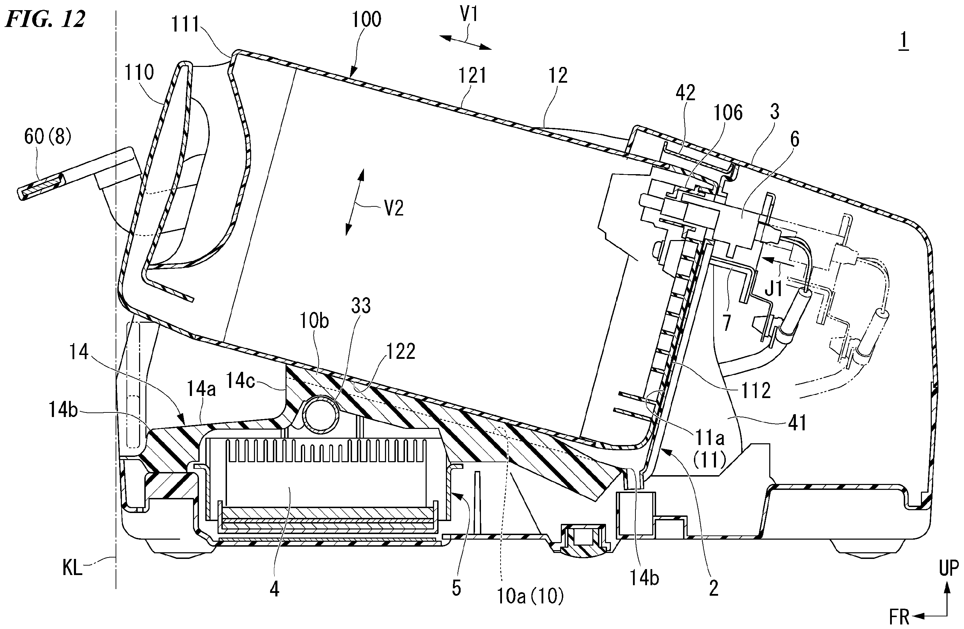

As illustrated in Fig. 2, the battery 100 has a pair of first side 101 and second side 102 above and below extending in a width direction V3, and a pair of third side 103 and fourth side 104 on the left and the right extending in a height direction V2 (refer to Fig. 12). The battery 100 has side surfaces 121 and 122 extending in a length direction V1 (refer to Fig. 12). The first side 101 has a curved line shape projecting toward a side opposite to the second side 102 (upper side in Fig. 2). The side surface 121 on a side of the first side 101 (one surface of the battery 100 in the height direction V2) of side surfaces of the battery 100 has a curved surface shape projecting toward a side opposite to the side surface 122 on a side of the second side 102.

The battery 100 has a grip portion 110 (handle) gripped by a user. The grip portion 110 is provided at an end portion of the battery 100 in the length direction V1 (refer to Fig. 12). The grip portion 110 is provided on a first surface 111 facing one side of the battery 100 in the length direction V1. A terminal 106 of the battery 100 (which will hereinafter be simply referred to as "a battery terminal 106") is provided on a second surface 112 (bottom surface) on a side opposite to the first surface 111 in the length direction V1 of the battery 100 (refer to Fig. 12). The battery terminal 106 is disposed in the vicinity of the side surface 121 (which will hereinafter be referred to as "a first side surface 121") on a side of the first side 101 of the second surface 112 (refer to Fig. 12).

### <Charger>

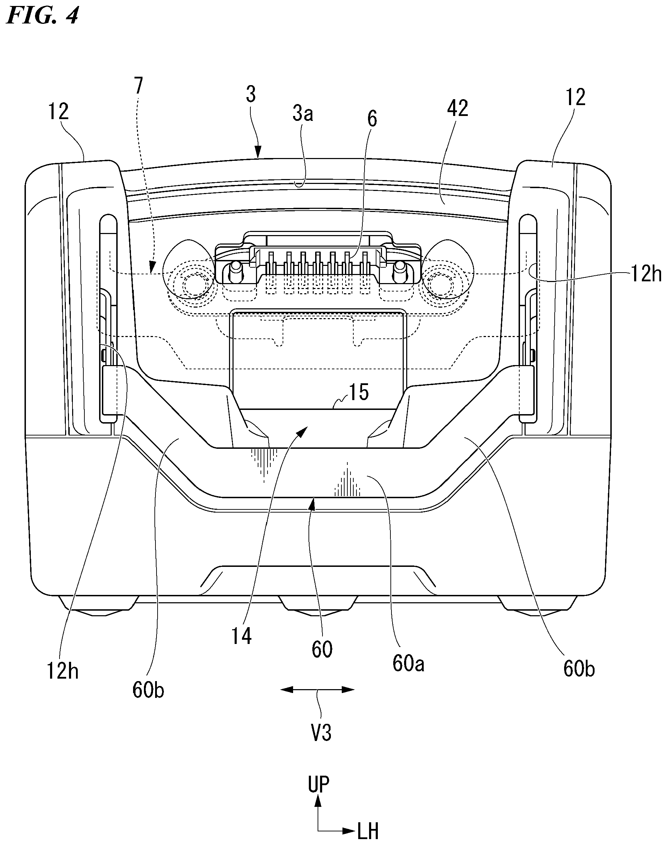

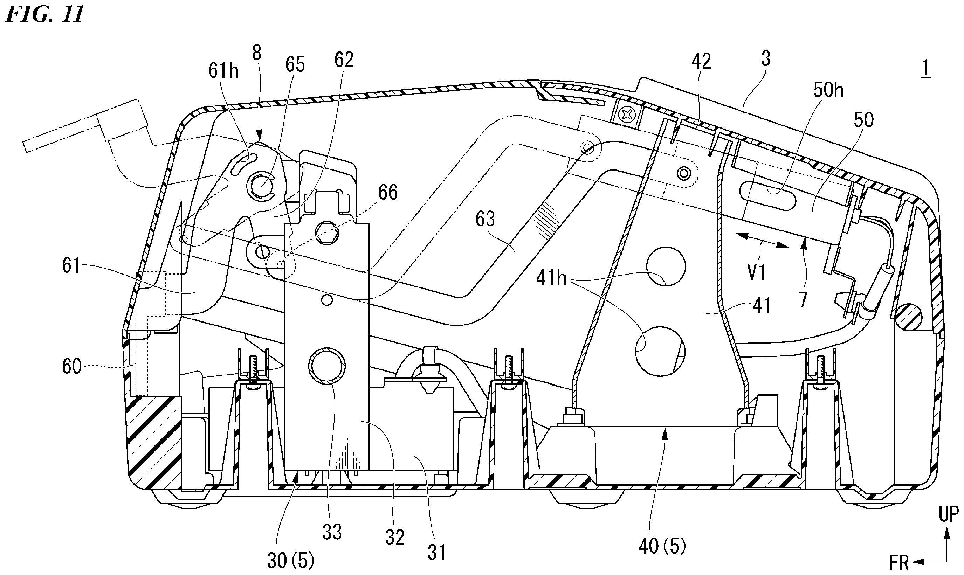

As illustrated in Fig. 1, a charger 1 includes a tray 2 in which the battery 100 is placed, an upper cover 3 which covers a portion of the tray 2 from above, a control device 4 which performs charging control of the battery 100 (refer to Fig. 12), a main body frame 5 which constitutes a skeleton of a main body of the charger 1 (refer to Fig. 11), a terminal 6 of the charger 1 (which will hereinafter be simply referred to as "a charger terminal 6", refer to Fig. 4), a holding member 7 which holds the charger terminal 6 (refer to Fig. 4), and an operation mechanism 8 which moves the charger terminal 6 (refer to Fig. 11). The bottom surface of the charger 1 is formed to be parallel to (horizontally with respect to) the floor surface.

In the following description, a depth direction when the charger 1 is installed on the floor surface (a direction orthogonal to the paper illustrated in Fig. 4) will be referred to as "a forward-rearward direction", a normal direction (vertical direction) of the floor surface will be referred to as "a vertical direction", and a direction orthogonal to each of the forward-rearward direction and the vertical direction will be referred to as "a lateral direction (width direction)". In the diagrams, an arrow FR indicates the forward side, an arrow UP indicates the upward side, and an arrow LH indicates the left side, respectively.

### <Tray>

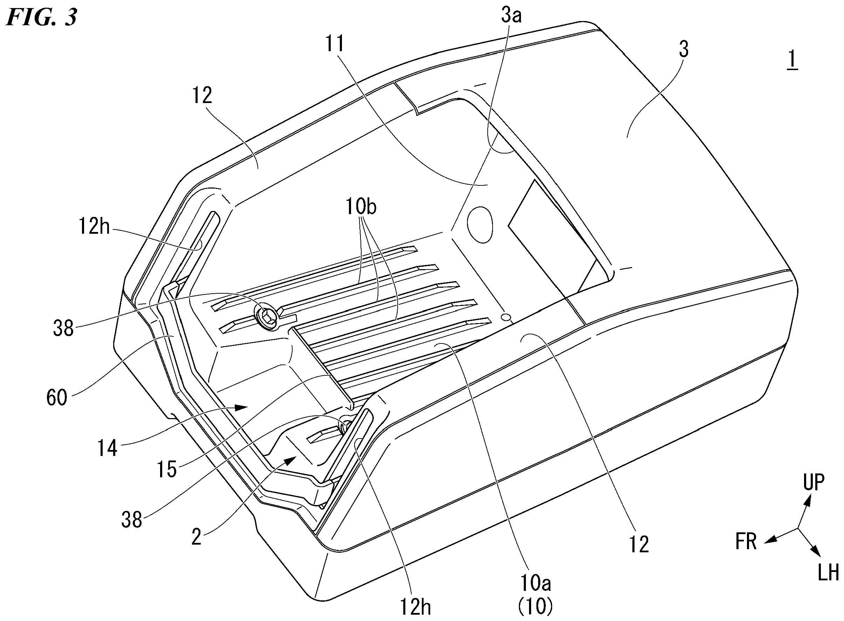

As illustrated in Fig. 3, the tray 2 opens upward and forward such that the battery 100 (refer to Fig. 1) can be placed and taken out. The tray 2 includes a bottom surface portion 10 which is formed in the length direction V1 of the battery 100 in a state of being placed in the charger 1, a receiving surface portion 11 which receives a bottom portion of the battery 100, and a pair of left and right side surface portions 12 which face the side surfaces of the battery 100 in the width direction V3. The receiving surface portion 11 and the pair of left and right side surface portions 12 rise from the bottom surface portion 10 in the height direction V2 of the battery 100 in a state of being placed in the charger 1 (refer to Fig. 12). In the diagrams, the reference sign 12h indicates a long hole for restricting movement of a lever 60 (turning of a first link 61 around a first pivot shaft 65).

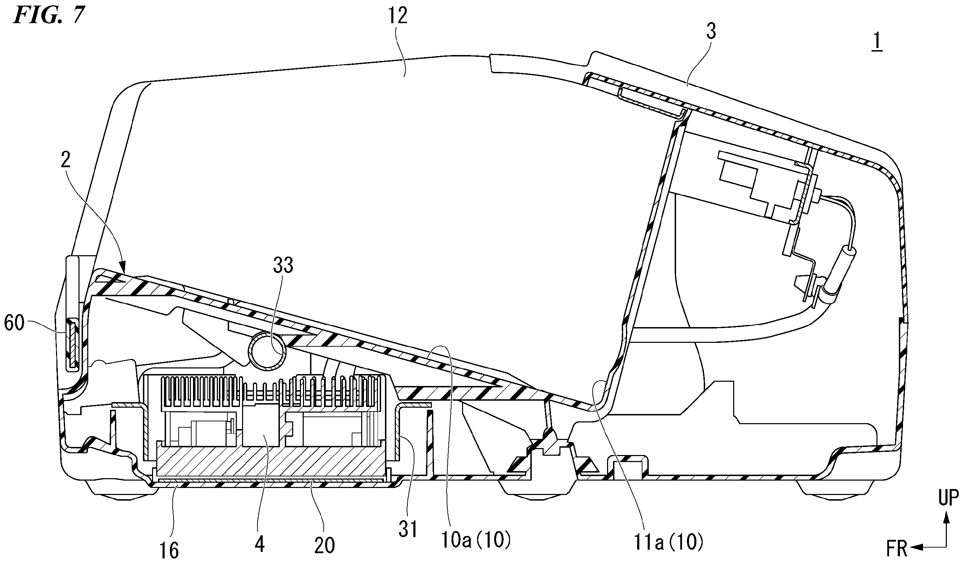

As illustrated in Fig. 7, the bottom surface portion 10 has a first inclined surface 10a which is inclined with respect to the bottom surface of the charger 1. The first inclined surface 10a is a placement surface on which the battery 100 is placed. The first inclined surface 10a is inclined with respect to a horizontal surface. The first inclined surface 10a is formed in the length direction V1 of the battery 100 in a state of being placed in the charger 1. The first inclined surface 10a is a surface facing the side surface 122 (which will hereinafter be referred to as "a second side surface 122") on a side of the second side 102 of the battery 100. The first inclined surface 10a is inclined such that the angle formed between the first inclined surface 10a and the bottom surface of the charger 1 becomes an acute angle smaller than 45°.

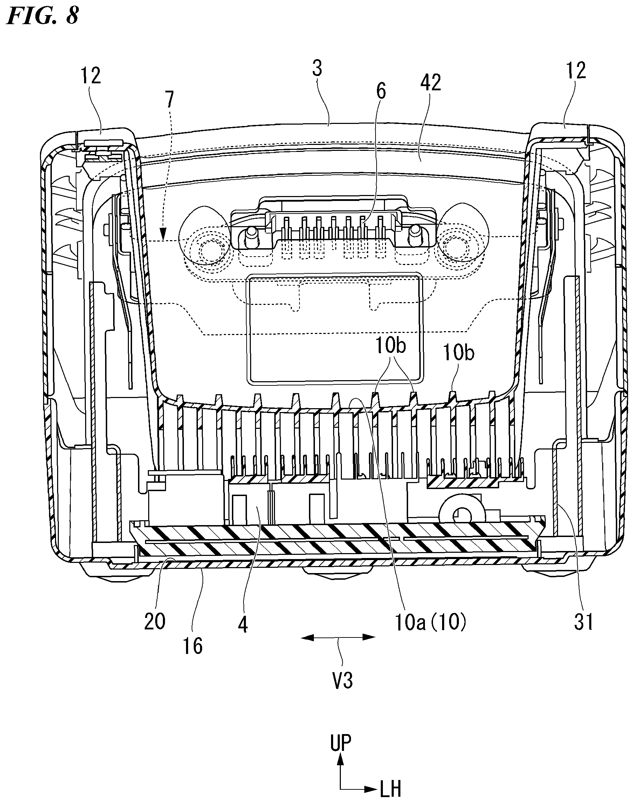

As illustrated in Fig. 8, a central portion on the first inclined surface 10a in the width direction V3 has a curved surface shape projecting downward. The first inclined surface 10a is curved such that a center position in the width direction V3 becomes the lowermost position, and outer end positions in the width direction V3 become the uppermost positions. The first inclined surface 10a in its entirety has an arc shape projecting downward.

Ribs 10b projecting upward are formed on the first inclined surface 10a. The ribs 10b extend in the forward-rearward direction. A plurality of ribs 10b are disposed at intervals in the width direction V3. Sizes of the intervals between two ribs 10b adjacent to each other in the width direction V3 are the same as each other. Upper ends of the plurality of ribs 10b in the vertical direction are positioned at the same positions. In a state in which the battery 100 is placed in the tray 2 (which will hereinafter be referred to as "a placed state"), the upper end of each of the ribs 10b comes into contact with the second side surface 122 of the battery 100.

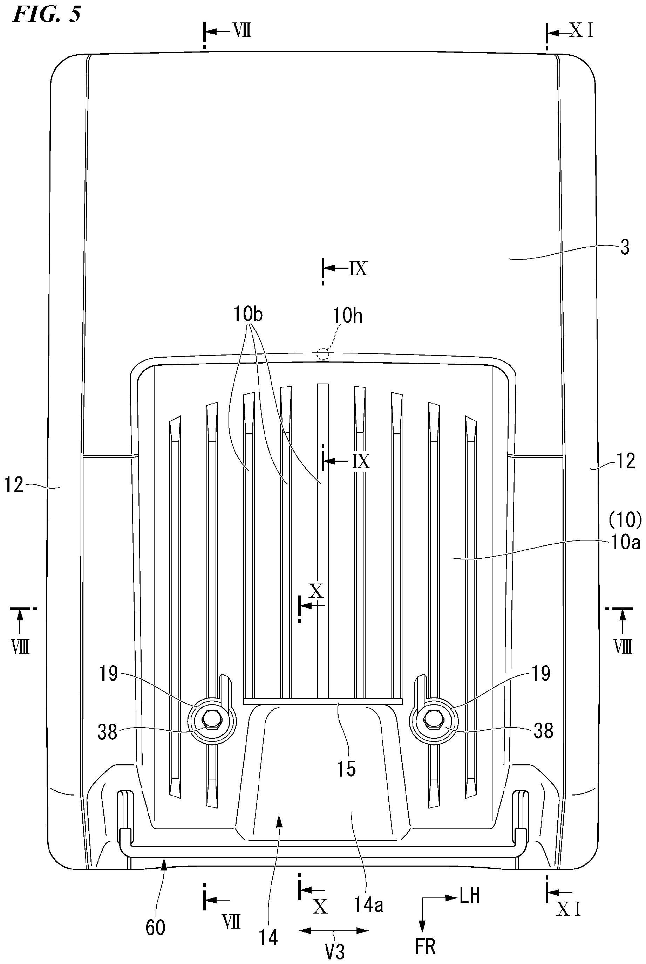

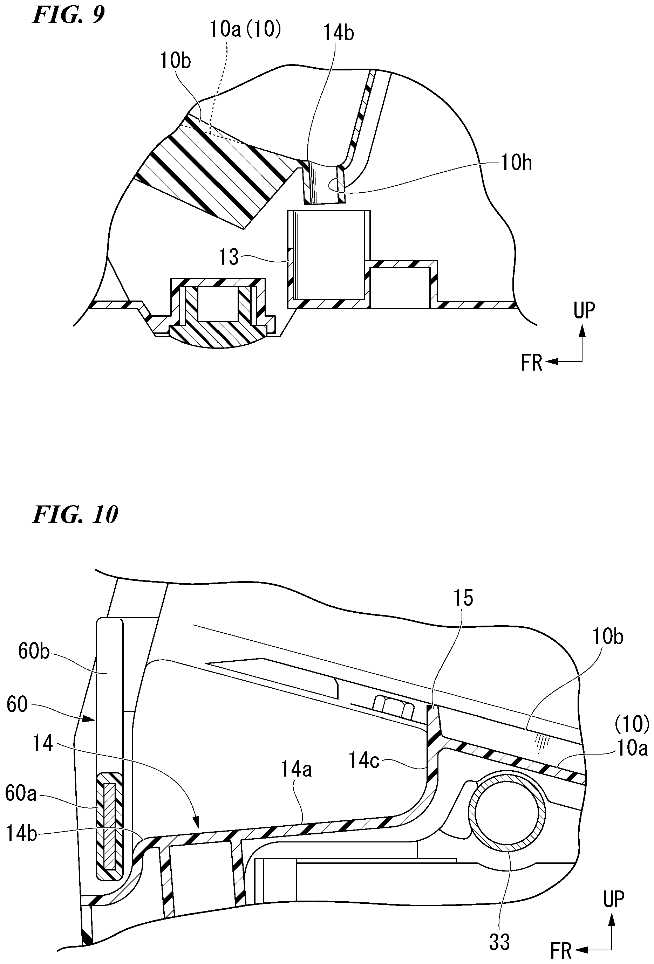

As illustrated in Fig. 9, a drain hole 10h is formed at a lowest end 14b on the first inclined surface 10a. The drain hole 10h is disposed at the center of a rear end portion on the first inclined surface 10a in the width direction V3 (refer to Fig. 5). The drain hole 10h opens at a rear end portion on the first inclined surface 10a in the vertical direction.

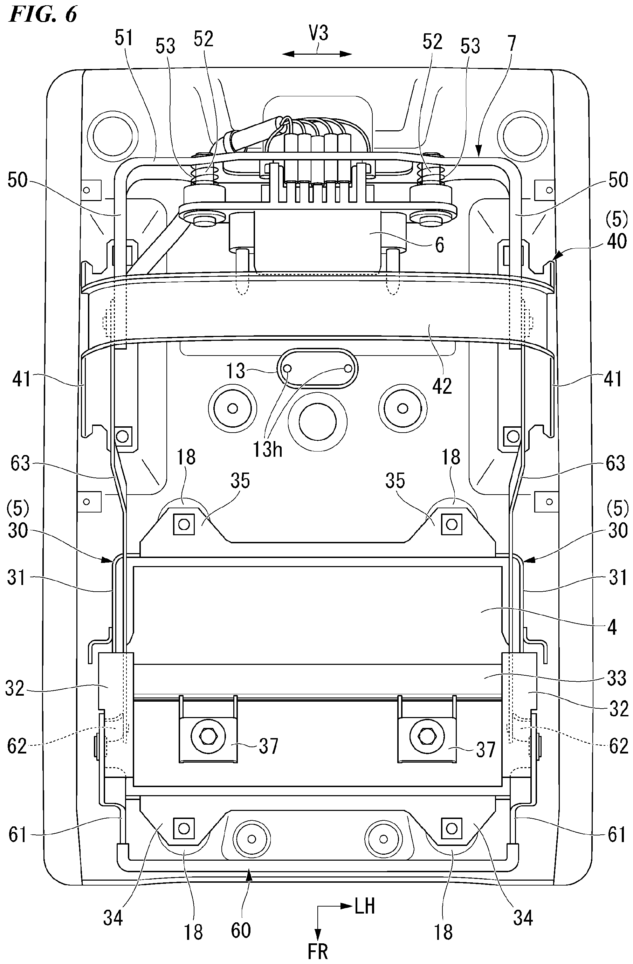

A bottom portion of the charger 1 has an enclosure portion 13 at a part positioned below the drain hole 10h. The enclosure portion 13 has a bottomed tubular shape with an opening larger than the drain hole 10h. Specifically, the enclosure portion 13 has an opening larger than a tubular portion having the drain hole 10h. The enclosure portion 13 has a ring shape extending in the width direction V3 (refer to Fig. 6). As illustrated in Fig. 6, discharge holes 13h are formed in a bottom portion of the enclosure portion 13. A pair of left and right discharge holes 13h are disposed with an interval therebetween in the width direction V3. The pair of left and right discharge holes 13h are disposed at both ends of the enclosure portion 13 in the width direction V3.

As illustrated in Fig. 7, the receiving surface portion 11 has a second inclined surface 1 1a which is inclined with respect to the bottom surface of the charger 1. The second inclined surface 11a rises from the end portion (rear lower end portion) on the first inclined surface 10a in the height direction V2 of the battery 100 in a placed state. The second inclined surface 11a is a part receiving the second surface 112 of the battery 100. The second inclined surface 11a is inclined such that it is orthogonal to the first inclined surface 10a. The second inclined surface 11a is inclined such that the angle formed between the second inclined surface 11a and the bottom surface of the charger 1 becomes an acute angle larger than 45°.

As illustrated in Fig. 12, upper end positions of the side surface portions 12 are positioned below an upper end position of the battery 100 in a placed state. In a side view of Fig. 7, upper end edges of the side surface portions 12 are inclined such that they are positioned downward toward the front side from the upper end positions. In a side view, front end edges of the side surface portions 12 are inclined such that they are positioned forward toward a lower side from front ends at the upper end edges.

As illustrated in Fig. 12, the grip portion 110 of the battery 100 in a placed state is disposed on an upper end side on the first inclined surface 10a. In a side view, the upper ends at the front end edges of the side surface portions 12 (front ends at the upper end edges) are positioned behind a front end position of the grip portion 110 of the battery 100 in a placed state. In a side view, a portion of the grip portion 110 of the battery 100 in a placed state is exposed from the side surface portions 12. In a side view, the front end portion of the battery 100 in a placed state does not protrude outward beyond the tray 2. In the diagrams, the reference sign KL indicates a perpendicular line (imaginary vertical line) passing through the front end portion of the tray 2. The front end portion of the battery 100 in a placed state is positioned on a side inward from the perpendicular line KL (charger 1 side).

The tray 2 has a recess portion 14 (which will hereinafter be referred to as "a placement surface recess portion 14") which is recessed downward beyond the first inclined surface 10a (placement surface) at the end portion on a side of the grip portion 110 of the battery 100 in a placed state. For example, the placement surface recess portion 14 has a size to an extent that a portion of a hand (finger) of a user enters. The placement surface recess portion 14 is disposed at the center of the tray 2 in the width direction V3 (refer to Fig. 4). In a top view, the placement surface recess portion 14 has a trapezoidal external shape having an upper base on the rear side and a lower base longer than the upper base in the width direction V3 on the front side (refer to Fig. 5).

In a cross-sectional view of Fig. 10, a bottom surface 14a of the placement surface recess portion 14 is inclined such that it is positioned downward toward the front side. The lowest end 14b of the placement surface recess portion 14 is positioned above the upper end of the control device 4 (refer to Fig. 12). In the diagrams, the reference sign 14c indicates a rising portion which rises upward toward the first inclined surface 10a from a rear end on the bottom surface 14a of the placement surface recess portion 14.

A wall portion 15 projecting upward beyond the first inclined surface 10a is provided at a boundary portion between the placement surface recess portion 14 and the first inclined surface 10a. The wall portion 15 is a part protruding upward beyond the first inclined surface 10a from an upper end of the rising portion 14c. The upper end edge of the wall portion 15 linearly extends in the width direction V3 (refer to Fig. 4).

The wall portion 15 is connected to a front end of the rib 10b of the plurality of ribs 10b positioned in the vicinity of the center in the width direction V3 (refer to Fig. 5). The position of the upper end of the wall portion 15 in the vertical direction is the same position as the positions of the upper ends of the ribs 10b in the vertical direction. The upper end of the wall portion 15 comes into contact with the second side surface 122 of the battery 100 in a placed state together with each of the ribs 10b.

### <Upper cover>

As illustrated in Fig. 3, the upper cover 3 is provided at an upper rear portion of the charger 1. The upper cover 3 covers a portion of the bottom surface portion 10 and the pair of left and right side surface portions 12 of the tray 2 from above (refer to Fig. 12). As illustrated in Fig. 12, the upper cover 3 covers the charger terminal 6 and the holding member 7 from above. In a side view, an upper edge of the upper cover 3 is inclined such that it is positioned downward toward the rear side. In a front view of Fig. 4, an opening edge portion 3a of the upper cover 3 has a curved surface shape along the first side surface 121 of the battery 100 (refer to Fig. 2).

### <Control device>

As illustrated in Fig. 12, the control device 4 is disposed below the first inclined surface 10a of the tray 2. In a top view of Fig. 6, the control device 4 has a rectangular shape extending in the width direction V3. The control device 4 includes a plurality of control substrates for performing charging control of the battery 100. For example, the control substrates may be disposed such that control circuits for performing charging control of the battery 100 are directed toward the inward side. For example, fins or heat sinks may be provided on outer surfaces of the control substrates.

As illustrated in Fig. 7, the bottom portion of the charger 1 has a recess portion 16 which is recessed downward (which will hereinafter be referred to as "a bottom surface recess portion 16") at a part positioned below the control device 4. When viewed in the vertical direction, the bottom surface recess portion 16 is disposed at a position overlapping the control device 4. When viewed in the vertical direction, the bottom surface recess portion 16 has a rectangular external shape larger than the external shape of the control device 4. A heat conduction member 20 is disposed in the bottom surface recess portion 16 having a higher heat conductivity than the bottom portion of the charger 1. For example, the bottom portion of the charger 1 is made of a resin. For example, the heat conduction member 20 is an aluminum sheet.

### <Main body frame>

As illustrated in Fig. 11, the main body frame 5 includes a front frame 30 which is positioned at a front portion of the charger 1, and a rear frame 40 which is positioned at a rear portion of the charger 1.

When viewed in the vertical direction, the front frame 30 includes a frame body 31 having a rectangular frame shape (refer to Fig. 6), a pair of left and right columnar bodies 32 extending in the vertical direction, and a cross pipe 33 (frame) extending in the width direction V3.

In a top view of Fig. 6, the frame body 31 has a rectangular frame shape larger than the external shape of the control device 4. The control device 4 is accommodated on the inward side of the frame body 31. In the diagrams, the reference sign 34 indicates a pair of left and right front flange portions which protrude forward from an upper front edge of the frame body 31, the reference sign 35 indicates a pair of left and right rear flange portions which protrude rearward from an upper rear edge of the frame body 31, and the reference sign 18 indicates boss portions of the bottom portion of the charger 1 which are disposed at positions respectively overlapping the flanges 34 and 35 in a top view. For example, each of the flange portions 34 and 35 is coupled to each of boss portions 18 using a fastening member such as a bolt.

The columnar bodies 32 are disposed on the outward sides of the frame body 31 in the width direction V3. Lower portions of the columnar bodies 32 are coupled to side portions of the frame body 31 in the width direction V3.

As illustrated in Fig. 7, the cross pipe 33 is disposed on the upper side of the control device 4. The cross pipe 33 extends throughout the entirety of the battery 100 in a placed state in the width direction V3 (refer to Fig. 12). In the width direction V3, the length of the cross pipe 33 is longer than that of the control device 4 (refer to Fig. 6). Left and right end portions of the cross pipe 33 are coupled to upper and lower central portions of the columnar bodies 32 (refer to Fig. 11).

As illustrated in Fig. 12, the cross pipe 33 is disposed between the control device 4 and the first inclined surface 10a in the vertical direction. The cross pipe 33 is disposed on a side closer to the grip portion 110 of the battery 100 in a placed state than the central portion on the first inclined surface 10a in the length direction V1. The cross pipe 33 is disposed behind and in the vicinity of the rising portion 14c of the placement surface recess portion 14.

In a top view of Fig. 6, the cross pipe 33 is disposed at a position overlapping a central portion of the control device 4 in the forward-rearward direction. In the diagrams, the reference sign 37 indicates a pair of left and right brackets which protrude forward from a front portion of the cross pipe 33, and the reference sign 19 (refer to Fig. 5) indicates boss portions of lower portion on the first inclined surface 10a which are disposed at positions respectively overlapping the brackets 37 in a top view. For example, each of the brackets 37 is coupled to each of the boss portions 19 using a fastening member 38 such as a bolt.

As illustrated in Fig. 11, the rear frame 40 is disposed behind the front frame 30. The rear frame 40 is disposed below the upper cover 3. The rear frame 40 includes a pair of left and right side wall portions 41 which extend in the vertical direction, and a width-direction-extending portion 42 which extends in the width direction V3 (refer to Fig. 6). The pair of left and right side wall portions 41 and the width-direction-extending portion 42 are integrally formed using the same members. The pair of left and right side wall portions 41 and the width-direction-extending portion 42 may be integrally formed using different members.

The side wall portions 41 are disposed on the outward sides of the rear portion of the tray 2 (rear portion of the battery 100 in a placed state) in the width direction V3 (refer to Fig. 12). In a side view of Fig. 11, the side wall portions 41 have external shapes of which lengths in the forward-rearward direction become longer toward the lower side. The side wall portions 41 have a pair of upper and lower circular opening portions 41h. Lower end portions of the side wall portions 41 are coupled to the bottom portion of the charger 1 using a fastening member such as a bolt.

The width-direction-extending portion 42 is disposed on the upper side of the rear portion of the tray 2 (rear portion of the battery 100 in a placed state) (refer to Fig. 12). The width-direction-extending portion 42 is disposed between the charger terminal 6 and the upper cover 3 in the vertical direction (refer to Fig. 12). Left and right end portions of the width-direction-extending portion 42 are coupled to upper ends of the side wall portions 41. In a front view of Fig. 4, the width-direction-extending portion 42 has a curved shape along the opening edge portion 3a of the upper cover 3. In a cross-sectional view of Fig. 12, the width-direction-extending portion 42 is inclined downward to the rear along the upper cover 3.

### <Holding member>

As illustrated in Fig. 12, the holding member 7 holds the charger terminal 6 in a connection direction to the battery 100 (arrow J1 direction in the diagram). In a top view of Fig. 6, the holding member 7 has a U-shape opening forward. The holding member 7 includes a pair of left and right side arm portions 50 which extend in the forward-rearward direction, and a support arm portion 51 which supports the charger terminal 6. The pair of left and right side arm portions 50 and support arm portion 51 are integrally formed using the same members. The pair of left and right side arm portions 50 and support arm portion 51 may be integrally formed using different members.

The side arm portions 50 are disposed on the inward sides of the side wall portions 41 of the rear frame 40 in the width direction V3. In a side view of Fig. 11, the side arm portions 50 extend such that they are positioned downward toward the rear side along the inclination of the battery 100 in a placed state. The side arm portions 50 have long holes 50h (guide holes). The long holes 50h extend in a direction in which the side arm portions 50 extend. The side arm portions 50 are supported by a shaft (not illustrated) in the width direction V3 of the charger 1 via the long holes 50h.

As illustrated in Fig. 6, the support arm portion 51 is disposed on the rear side of the charger terminal 6. The support arm portion 51 extends in the width direction V3. Left and right end portions of the support arm portion 51 are coupled to rear ends of the side arm portions 50. In the diagrams, the reference sign 52 indicates a pair of left and right support pins which protrude forward from the support arm portion 51, and the reference sign 53 indicates biasing members (elastic members) such as springs which are respectively provided in the support pins.

At a connection position (refer to the solid line in Fig. 12) where the charger terminal 6 is connected to the battery 100, the charger terminal 6 is biased by the biasing member 53 in the arrow J1 direction in the diagram toward the battery terminal 106. That is, the biasing member 53 biases the charger terminal 6 in the connection direction to the battery 100 at the connection position.

### <Operation mechanism>

As illustrated in Fig. 12, the operation mechanism 8 includes the lever 60 (operation portion) which allows movement between the connection position where the charger terminal 6 is connected to the battery terminal 106 (which will hereinafter be simply referred to as "a connection position", refer to the solid line in Fig. 12) and a retreat position for retreat from the battery terminal 106 (which will hereinafter be referred to as "a retreat position", refer to the two-dot dashed line in Fig. 12).

Here, the connection position means a position where the charger terminal 6 is fitted into the terminal 106 of the battery 100 in a placed state. The retreat position means a position where the charger terminal 6 has separated from the terminal 106 of the battery 100 in a placed state. The operation mechanism 8 moves the charger terminal 6 between the connection position and the retreat position using a link mechanism. As illustrated in Fig. 11, the operation mechanism 8 includes the lever 60 (operation portion); and the first link 61, a second link 62, and a third link 63 constituting the link mechanism.

As illustrated in Fig. 5, the lever 60 is disposed on the outward side of the charger 1 from the placement surface recess portion 14. The lever 60 has a U-shape opening upward at the center of the tray 2 in the width direction V3 (refer to Fig. 4). In a front view of Fig. 4, the lever 60 includes a first extending portion 60a which extends in the width direction V3, and a second extending portion 60b which is inclined and extends such that it is positioned upward toward the outward side in the width direction V3 from left and right end portions of the first extending portion 60a.

As illustrated in Fig. 11, the lever 60 can turn around a shaft in the width direction V3 of the charger 1 (around the first pivot shaft 65). The lever 60 is constituted such that it turns downward around the shaft due to a load from above. The lever 60 is constituted such that it turns upward around the shaft due to a load from below. The lever 60 at the connection position (refer to the two-dot dashed line in Fig. 11) is in a state in which the lever 60 has turned further upward around the shaft than the lever 60 at the retreat position (refer to the dotted line in Fig. 11). A portion of the lever 60 (a portion of the first extending portion 60a) is positioned below the lowest end 14b of the placement surface recess portion 14 at the retreat position (refer to Fig. 10).

As illustrated in Fig. 11, the first link 61 extends in a manner of straddling between the end portion of the lever 60 (second extending portion 60b) in the width direction V3 and the first pivot shaft 65 (a shaft serving as a fulcrum). One end portion of the first link 61 is coupled (fixed) to the end portion of the lever 60 in the width direction V3. The other end portion of the first link 61 (an end portion on a side opposite to the lever 60) can turn around the first pivot shaft 65. The other end portion of the first link 61 has a long hole 61h which restricts turning around the first pivot shaft 65 and has an arc shape in a side view.

The second link 62 extends in a manner of straddling between the first pivot shaft 65 and a second pivot shaft 66 (a shaft serving as an action point). One end portion of the second link 62 is coupled (fixed) to the other end portion of the first link 61. One end portion of the second link 62 can turn around the first pivot shaft 65.

The third link 63 extends in a crank shape in the forward-rearward direction in a manner of straddling between the second pivot shaft 66 and the holding member 7. One end portion of the third link 63 is connected to the other end portion of the second link 62 via the second pivot shaft 66. The other end portion of the third link 63 is coupled (fixed) to the front end portions of the side arm portions 50 of the holding member 7 using a fastening member such as a bolt.

The third link 63 moves in a direction along the inclination of the placement surface of the tray 2 (inclination of the battery 100 in a placed state) (arrow V1 direction in the diagram, a direction in which the long holes of the side arm portions 50 extend) when the lever 60 is moved between the connection position and the retreat position. Although it is not illustrated, at least one of the other end portion of the second link 62 and one end portion of the third link 63 has a part for converting turning around the second pivot shaft 66 into movement in the arrow V1 direction in the diagram (for example, an escape portion such as a long hole).

### <Position of end portion of upper cover>

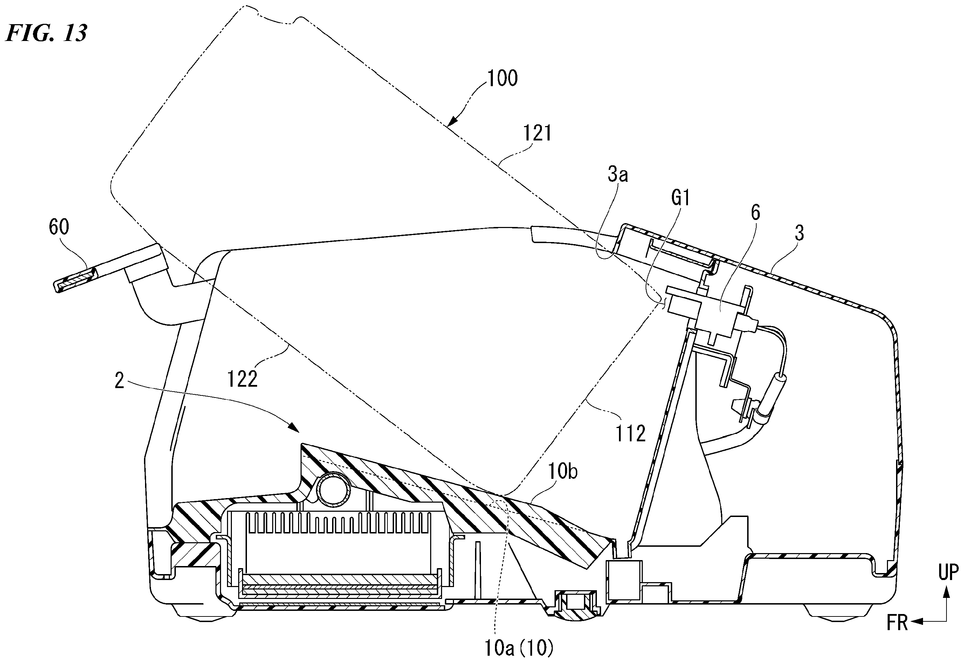

Fig. 13 illustrates an example of a case in which the battery 100 is inserted between the lever 60 at the connection position and the upper cover 3. In the example of Fig. 13, a portion on the second side surface 122 of the battery 100 comes into contact with the upper end of the lever 60 at the connection position. In addition, a lower corner portion of the battery 100 (a corner portion formed by the second side surface 122 and the second surface 112 of the battery 100) comes into contact with the ribs 10b on the first inclined surface 10a of the tray 2. In addition, a portion on the first side surface 121 of the battery 100 comes into contact with the opening edge portion 3a of the upper cover 3. The position of the end portion of the upper cover 3 is set such that the charger terminal 6 does not interfere with the second surface 112 of the battery 100 when the battery 100 is inserted between the lever 60 at the connection position and the upper cover 3. In the diagrams, the reference sign G1 indicates a gap between the second surface 112 of the battery 100 and the charger terminal 6.

### <Operational effects>

As described above, the charger 1 for the portable battery 100 of the foregoing embodiment is used in an electric vehicle and has the grip portion 110. The charger 1 for the portable battery 100 includes the tray 2 which has the placement surface 10a in which the battery 100 is placed. The tray 2 has the recess portion 14 which is recessed further downward than the placement surface 10a at the end portion on a side of the grip portion 110 in a state in which the battery 100 is placed therein.

According to this constitution, the battery 100 can be stably supported by the side portions of the recess portion 14 of the tray 2. Furthermore, since a hand can enter the recess portion 14 when the battery 100 is lifted from the charger 1 or placed in the charger 1, the convenience when the battery 100 is attached to and detached from the charger 1 can be improved. Therefore, the convenience when the battery 100 is attached to and detached from the charger 1 can be improved while stability at the time of placement of the battery is achieved.

For example, since the grip portion 110 in a state in which the battery 100 (heavy article) is placed therein can be touched with a hand from below via the recess portion 14, this is favorable when the battery 100 is lifted from the charger 1.

In the foregoing embodiment, the recess portion 14 is disposed at the center of the tray 2 in the width direction V3. Therefore, the following effect is exhibited.

Since the battery 100 can be held in a well-balanced manner, the convenience is further improved. Furthermore, compared to when the recess portion 14 is provided throughout the entirety of the tray 2 in the width direction V3, the stability in a state in which the battery 100 is placed therein can be enhanced.

In the foregoing embodiment, the charger 1 further includes the lever 60 which allows the charger terminal 6 to move between the connection position for connection to the battery 100 and the retreat position for retreat from the battery 100. The lever 60 is disposed on the outward side of the charger 1 from the recess portion 14, and the lever 60 has a U-shape opening upward at the center of the tray 2 in the width direction V3. Therefore, the following effect is exhibited.

Compared to when the lever 60 has a U-shape opening downward (inverted U-shape), the lever 60 is unlikely to become a hindrance so that the convenience is further improved.

In the foregoing embodiment, a portion of the lever 60 is positioned further downward than the lowest end 14b of the recess portion 14 at the retreat position. Therefore, the following effect is exhibited.

Compared to when the entire lever 60 is positioned above the lowest end of the recess portion 14 at the retreat position, the lever 60 is unlikely to become a hindrance at the retreat position so that the convenience is further improved.

In the foregoing embodiment, the wall portion 15 projecting upward beyond the placement surface 10a is provided at the boundary portion between the recess portion 14 and the placement surface 10a. Therefore, the following effect is exhibited.

When a hand of a user is in the recess portion 14 in a state in which the battery 100 is placed therein, entry of the hand to the placement surface 10a can be curbed by the wall portion 15.

In the foregoing embodiment, the charger 1 further includes the control device 4 which performs charging control of the battery 100. The control device 4 is disposed below the tray 2. The lowest end 14b of the recess portion 14 is positioned above the upper end of the control device 4. Therefore, the following effect is exhibited.

Even when a load is applied to the recess portion 14, occurrence of an influence on the control device 4 can be curbed.

In the foregoing embodiment, the cross pipe 33 is provided behind and in the vicinity of the rising portion 14c which rises on the placement surface 10a from the bottom surface 14a of the recess portion 14. Therefore, the following effect is exhibited.

A part behind and in the vicinity of the rising portion 14c on the placement surface 10a is a part at which the battery 100 is easily placed. However, the occurrence of a load on the control device 4 when the battery 100 is placed in the tray 2 can be suitably curbed by the cross pipe 33.

In the foregoing embodiment, the end portion of the battery 100 does not protrude outward beyond the tray 2 in a state in which the battery 100 is placed therein. Therefore, the following effect is exhibited.

Compared to when the end portion of the battery 100 protrudes outward beyond the tray 2 in a state in which the battery 100 is placed therein, stability in a state in which the battery 100 is placed therein can be enhanced. Furthermore, the occurrence of an influence on the end portion of the battery 100 due to an external factor can be curbed.

### <Modification example>

In the foregoing embodiment, an example in which the first inclined surface 10a is inclined with respect to the bottom surface of the charger 1 has been described, but it is not limited thereto. For example, the first inclined surface 10a may be parallel to the bottom surface of the charger 1. For example, the bottom surface of the charger 1 (for example, the bottom surface of a locker or the like for placement of a charger) may be inclined with respect to a horizontal surface, and the bottom surface of the charger 1 and the first inclined surface 10a may be parallel to each other. The first inclined surface 10a need only be inclined with respect to a horizontal surface. That is, the battery 100 need only be disposed such that it is inclined upward.

In the foregoing embodiment, an example in which the recess portion 14 is disposed at only the center of the tray 2 in the width direction V3 has been described, but it is not limited thereto. For example, the recess portion 14 may be disposed throughout the entirety of the tray 2 in the width direction V3. For example, the recess portion 14 may be disposed at the end portion of the tray 2 in the width direction V3.

In the foregoing embodiment, an example in which the lever 60 has a U-shape opening upward at the center of the tray 2 in the width direction V3 has been described, but it is not limited thereto. For example, the lever 60 may have a U-shape opening downward (inverted U-shape). The shape of the lever 60 can be changed in accordance with the required specification.

In the foregoing embodiment, an example in which a portion of the lever 60 is positioned further downward than the lowest end 14b of the recess portion 14 at the retreat position has been described, but it is not limited thereto. For example, the entire lever 60 may be positioned further downward than the lowest end 14b of the recess portion 14 at the retreat position. That is, at least a portion of the lever 60 may be positioned further downward than the lowest end 14b of the recess portion 14 at the retreat position. Alternatively, the entire lever 60 may be positioned above the lowest end of the recess portion 14 at the retreat position.

In the foregoing embodiment, an example in which the wall portion 15 projecting upward is provided at the boundary portion between the recess portion 14 and the placement surface 10a has been described, but it is not limited thereto. For example, the wall portion 15 projecting upward may not be provided at the boundary portion between the recess portion 14 and the placement surface 10a.

In the foregoing embodiment, an example in which the lowest end 14b of the recess portion 14 is positioned above the upper end of the control device 4 has been described, but it is not limited thereto. For example, the lowest end 14b of the recess portion 14 may be positioned below the upper end of the control device 4.

In the foregoing embodiment, an example in which the cross pipe 33 is provided behind and in the vicinity of the rising portion 14c which rises on the placement surface 10a from the bottom surface 14a of the recess portion 14 has been described, but it is not limited thereto. For example, the cross pipe 33 may not be provided behind and in the vicinity of the rising portion 14c.

In the foregoing embodiment, an example in which the end portion of the battery 100 does not protrude outward beyond the tray 2 in a state in which the battery 100 is placed therein has been described, but it is not limited thereto. For example, the end portion of the battery 100 may protrude outward beyond the tray 2 in a state in which the battery 100 is placed therein.

In the foregoing embodiment, an example in which the cross pipe 33 extends throughout the entirety of the battery 100 in the width direction V3 has been described, but it is not limited thereto. For example, the cross pipe 33 may extend along a portion of the battery 100 in the width direction V3. For example, the cross pipe 33 may extend in a direction intersecting the width direction V3 of the battery 100. For example, the frame positioned between the control device 4 and the first inclined surface 10a in the vertical direction may be a constitution such as a plate member other than the cross pipe 33.

In the foregoing embodiment, an example in which the biasing member 53 biasing the charger terminal 6 in the connection direction to the battery 100 at the connection position is provided has been described, but it is not limited thereto. For example, the charger terminal 6 may not be biased by the biasing member 53 toward the battery terminal 106. That is, the charger 1 may not have the biasing member 53.

In the foregoing embodiment, an example in which the operation mechanism 8 moves the charger terminal 6 between the connection position and the retreat position using the link mechanism has been described, but it is not limited thereto. For example, the operation mechanism 8 may move the charger terminal 6 between the connection position and the retreat position using a constitution such as a cam mechanism other than the link mechanism.

The present invention is not limited to the foregoing embodiment. For example, the foregoing saddle-type vehicle includes all types of vehicles in which a rider rides the vehicle in a manner of straddling a vehicle body and includes not only motorcycles (including motorized bicycles and scooter-type vehicles) but also vehicles having three wheels (including vehicles having two front wheels and one rear wheel in addition to vehicles having one front wheel and two rear wheels). In addition, the present invention can be applied to not only motorcycles but also vehicles having four wheels such as automobiles.

For example, the charger is not limited to a charger for a mobile battery of a motorcycle and may be applied to a charger for an electrical instrument other than an electric vehicle.

Further, the constitutions in the foregoing embodiment are examples of the present invention, and various changes can be made within a range not departing from the gist of the present invention as defined in the appended claim 1, such as replacing the constituent elements of the embodiment with known constituent elements.

### BRIEF DESCRIPTION OF THE REFERENCE SYMBOLS

1 Charger
2 Tray
4 Control device
6 Charger terminal
10a First inclined surface (placement surface)
14 Placement surface recess portion (recess portion)
14a Bottom surface of placement surface recess portion (bottom surface of recess portion)
14b Lowest end of placement surface recess portion (lowest end of recess portion)
14c Rising portion
15 Wall portion
33 Cross pipe (frame)
60 Lever (operation portion)
100 Battery
110 Grip portion
V3 Width direction of battery (width direction of tray)

## Claims

1. A charger (1) having a portable battery used in an electric vehicle and having a grip portion (110), the charger (1) comprising:
a tray (2) which has a placement surface (10a) on which the battery (100) is placed,
**characterized in that** the tray (2) has a recess portion (14) which is recessed further downward beyond the placement surface (10a) at an end portion of the placement surface (10a) on a side of the grip portion (110) in a state in which the battery (100) is placed in the tray (2).

2. The charger for a portable battery according to claim 1,
wherein the recess portion (14) is disposed at a center of the tray (2) in a width direction (V3).

3. The charger for a portable battery according to claim 1 or 2 further comprising:
an operation portion (60) which allows a charger terminal (6) to move between a connection position for connection to the battery (100) and a retreat position for retreat from the battery (100),
wherein the operation portion (60) is disposed on an outward side of the charger (1) from the recess portion (14), and the operation portion (60) has a U-shape opening upward at the center of the tray (2) in the width direction (V3).

4. The charger for a portable battery according to claim 3,
wherein at least a portion of the operation portion (60) is positioned further downward than a lowest end (14b) of the recess portion (14) at the retreat position.

5. The charger for a portable battery according to any one of claims 1 to 4,
wherein a wall portion (15) projecting upward beyond the placement surface (10a) is provided at a boundary portion between the recess portion (14) and the placement surface (10a).

6. The charger for a portable battery according to any one of claims 1 to 5 further comprising:
a control device (4) which performs charging control of the battery (100),
wherein the control device (4) is disposed below the tray (2), and
wherein the lowest end (14b) of the recess portion (14) is positioned above an upper end of the control device (4).

7. The charger for a portable battery according to claim 6,
wherein a frame (33) is provided behind and in the vicinity of a rising portion (14c) which rises on the placement surface (10a) from a bottom surface (14a) of the recess portion (14).

8. The charger for a portable battery according to any one of claims 1 to 7,
wherein an end portion of the battery (100) does not protrude outward beyond the tray (2) in a state in which the battery (100) is placed in the tray (2).

## Patentansprüche

1. Ein Ladegerät (1) mit einer in einem Elektrofahrzeug verwendeten und mit einem Griffabschnitt (110) ausgestatteten tragbaren Batterie, wobei das Ladegerät (1) aufweist: eine Schale (2) mit einer Ablagefläche (10) auf der die Batterie (100) abgelegt wird, **dadurch gekennzeichnet, dass** die Schale (2) einen Ausnehmungs-Abschnitt (14) aufweist, der, in einem Zustand, in dem die Batterie (100) in der Schale (2) abgelegt ist, an dem auf Seiten des Griffabschnitts (110) befindlichen Endabschnitt der Ablagefläche (10a) durch eine über die Ablagefläche (10a) nach unten hinausragende Ausnehmung gebildet ist.

2. Das Ladegerät für eine tragbare Batterie nach Anspruch 1, wobei der Ausnehmungs-Abschnitt (14), in Breitenrichtung (V3) gesehen, in der Mitte der Schale (2) angeordnet ist.

3. Das Ladegerät für eine tragbare Batterie nach Anspruch 1 oder 2, ferner aufweisend:
einen Betätigungsabschnitt (60), durch dessen Betätigung es möglich ist, einen Ladegerät-Anschluss (6) zwischen einer Verbindungsposition zur Verbindung mit der Batterie (100) und einer Retreat-Position zur Trennung von der Batterie (100) zu bewegen,
wobei der Betätigungsabschnitt (60) an einer von dem Ausnehmungs-Abschnitt (14) nach außen gerichteten Seite des Ladegerätes (1) angeordnet ist, und wobei der Betätigungsabschnitt (60), in Breitenrichtung (V3) gesehen, in der Mitte der Schale (2) eine nach oben gerichtete U-Form aufweist.

4. Das Ladegerät für eine tragbare Batterie nach Anspruch 3,
wobei in der Retreat-Position zumindest ein Teil des Betätigungsabschnitts (60) unterhalb des untersten Endes (14b) des Ausnehmungs-Abschnitts (14) positioniert ist.

5. Das Ladegerät für eine tragbare Batterie nach einem der Ansprüche 1 bis 4, wobei an einem Grenzabschnitt zwischen Ausnehmungs-Abschnitt (14) und Ablagefläche (10a) ein über die Ablagefläche (10a) hinaus nach oben ragender Wandabschnitt (15) vorgesehen ist.

6. Das Ladegerät für eine tragbare Batterie nach einem der Ansprüche 1 bis 5, ferner aufweisend:
eine die Ladesteuerung der Batterie (100) durchführende Steuervorrichtung (4), wobei die Steuervorrichtung (4) unter der Schale (2) angeordnet ist, und wobei das unterste Ende (14b) des Ausnehmungs-Abschnitts (14) über einem oberen Ende der Steuervorrichtung (4) positioniert ist.

7. Das Ladegerät für eine tragbare Batterie nach Anspruch 6, wobei hinter und in der Nähe eines sich über die Ablagefläche (10a) erhebenden, von der Bodenfläche (14a) des Ausnehmungs-Abschnitts (14) ansteigenden Abschnitts (14c) ein Rahmen (33) vorgesehen ist.

8. Das Ladegerät für eine tragbare Batterie nach einem der Ansprüche 1 bis 7, wobei in einem Zustand, in dem die Batterie (100) in der Schale (2) abgelegt ist, der Endabschnitt der Batterie (100) nicht über die Schale (2) hinausragt.

## Revendications

1. Chargeur (1) présentant une batterie portable utilisée dans un véhicule électrique et présentant une partie de saisie (110), le chargeur (1) comprenant :
un plateau (2) présentant une surface de placement (10a) sur laquelle la batterie (100) est placée,
**caractérisé en ce que** le plateau (2) présente une partie d'évidement (14) qui est évidée davantage vers le bas au-delà de la surface de placement (10a) au niveau d'une partie d'extrémité de la surface de placement (10a) sur un côté de la partie de saisie (110) dans un état dans lequel la batterie (100) est placée dans le plateau (2).

2. Chargeur pour une batterie portable selon la revendication 1,
dans lequel la partie d'évidement (14) est disposée au niveau d'un centre du plateau (2) dans une direction de largeur (V3).

3. Chargeur pour une batterie portable selon la revendication 1 ou 2, comprenant en outre :
une partie de fonctionnement (60) qui permet à une borne de chargeur (6) de se déplacer entre une position de branchement pour être branchée à la batterie (100) et une position de retrait pour être retirée de la batterie (100),
dans lequel la partie de fonctionnement (60) est disposée sur un côté extérieur du chargeur (1) à partir de la partie d'évidement (14), et la partie de fonctionnement (60) présente une ouverture en forme de U vers le haut au niveau du centre du plateau (2) dans la direction de largeur (V3).

4. Chargeur pour une batterie portable selon la revendication 3,
dans lequel au moins une partie de la partie de fonctionnement (60) est positionnée davantage vers le bas qu'une extrémité la plus basse (14b) de la partie d'évidement (14) au niveau de la position de retrait.

5. Chargeur pour une batterie portable selon l'une quelconque des revendications 1 à 4,
dans lequel une partie de paroi (15) faisant saillie vers le haut au-delà de la surface de placement (10a) est prévue au niveau d'une partie de limite entre la partie d'évidement (14) et la surface de placement (10a).

6. Chargeur pour une batterie portable selon l'une quelconque des revendications 1 à 5, comprenant en outre :
un dispositif de commande (4) qui réalise une commande de charge de la batterie (100),
dans lequel le dispositif de commande (4) est disposé au-dessous du plateau (2), et
dans lequel l'extrémité la plus basse (14b) de la partie d'évidement (14) est positionnée au-dessus d'une extrémité supérieure du dispositif de commande (4).

7. Chargeur pour une batterie portable selon la revendication 6,
dans lequel un cadre (33) est prévu derrière et à proximité d'une partie montante (14c) qui monte sur la surface de placement (10a) depuis une surface inférieure (14a) de la partie d'évidement (14).

8. Chargeur pour une batterie portable selon l'une quelconque des revendications 1 à 7,
dans lequel une partie d'extrémité de la batterie (100) ne fait pas saillie vers l'extérieur au-delà du plateau (2) dans un état dans lequel la batterie (100) est placée dans le plateau (2).
